# EUROPÄISCHE PATENTSCHRIFT

(11) **EP 2 769 129 B1**
(45) Veröffentlichungstag und Bekanntmachung des Hinweises auf die Patenterteilung: **05.10.2016**
(21) Anmeldenummer: 12780644.6
(22) Anmeldetag: 09.10.2012
(51) Int. Cl.: F16K 37/00, F16K 31/06, F15B 13/044

(54) **VORSTEUERSTUFE FÜR EIN PROPORTIONAL GESTEUERTES HOCHDRUCK-HYDRAULIKVENTIL**
PILOT-CONTROL STAGE FOR A PROPORTIONALLY CONTROLLED HIGH-PRESSURE HYDRAULIC VALVE
ÉTAGE DE PILOTAGE D'UNE SOUPAPE HYDRAULIQUE HAUTE PRESSION À COMMANDE PROPORTIONNELLE

(30) Priorität: 20.10.2011 DE 102011116393
(43) Veröffentlichungstag der Anmeldung: 27.08.2014
(73) Patentinhaber: Dynamics Systems S.A., 1466 Luxemburg (LU); Schwelm, Hans, 41564 Kaarst (DE)
(72) Erfinder: SCHWELM, Hans, 41564 Kaarst (DE)
(74) Vertreter: Walther, Walther & Hinz GbR
(86) Internationale Anmeldenummer: PCT/DE2012/000984
(87) Internationale Veröffentlichungsnummer: WO 2013/056689

(56) Entgegenhaltungen:
- DE-A1- 19 912 488
- DE-B3-102007 054 655

## Beschreibung

Die vorliegende Erfindung betrifft eine Vorsteuerstufe für ein proportional gesteuertes Hochdruck-Hydraulikventil gemäß dem Oberbegriff des Anspruches 1.

Hydraulische Ventile werden zur Betätigung von Robotern, Werkzeugen oder automatisierten Fertigungsanlagen eingesetzt. Bei vielen Anwendungen kann das Hydraulikventil im Niederdruckbereich bis 100 bar betrieben werden. Bei anderen Anwendungen, wie zum Beispiel in der Landwirtschaft, wo an Traktoren oder Mähdreschern angebrachte Boden- oder Pflanzenbearbeitungswerkzeuge hydraulisch betätigt werden, bei Kränen, großen Pressen oder bei Spritzgussmaschinen ist es aufgrund der anliegenden Kräfte erforderlich, die Hydraulikventile im Hochdruckbereich von 150 bar bis 500 bar, in Spezialfällen auch bis 1200 bar zu betreiben.

Bei Niederdruck Hydraulikventilen werden häufig Proportionalmagnete zur Steuerung des Hydraulikventils eingesetzt (siehe www.vfmz.vfmz.com/ industrie-service/oup/fluid_lexikon/p/entry_proportionalmagnet_1957.html), bei denen ein proportionales Öffnen oder Schließen des Ventils über die Stromzufuhr gesteuert wird. Ein derartiges Proportionalventil ist beispielsweise aus der DE 88 13 817.8 bekannt. Die von der Spule auf die Ankerachse ausgeübten Kräfte sind allerdings begrenzt, so dass ein Einsatz von Proportionalmagneten im Hochdruckbereich ab 100 bis 150 bar Hydraulikdruck nicht möglich ist. Aus der DE 10 2007 054 655 B3 ist ein einstufiges Sitzventil beschrieben, bei dem über ein im Dichtkörper angeordneten Kanal eine hydraulische Verbindung zwischen dem Hydrauliksystem und einer Kammer 5 vorgesehen ist, um die Strömungskräfte des Fluids zumindest teilweise zu kompensieren. Dabei sind auch hier die von der Spule auf die Ankerachse ausgeübten Kräfte begrenzt, sodass ein Einsatz eines solchen Sitzventils im Hochdruckbereich ab 100 bis 150 bar Hydraulikdruck nicht möglich ist. Auch ist mit einem solchen Sitzventil eine Proportionalsteuerung nicht präzise darstellbar.

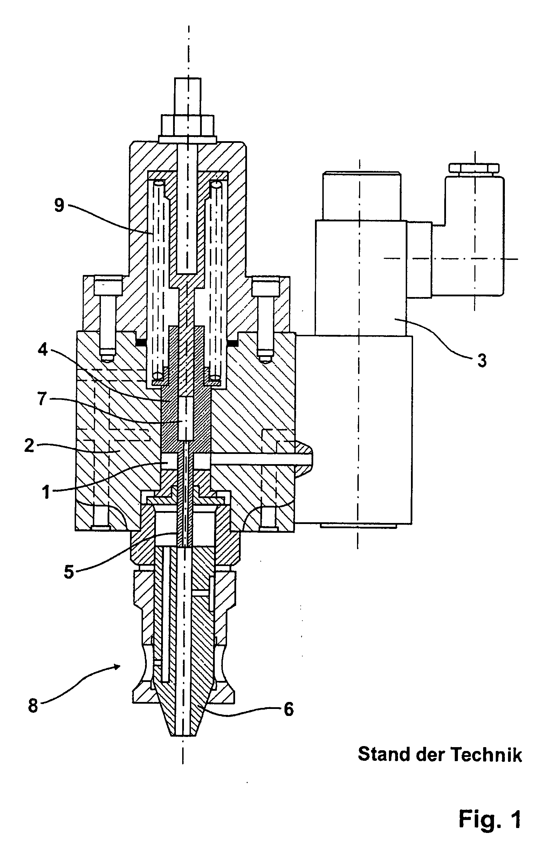

Um bei einem Hydraulikdruck ab 150 bar die zum Öffnen und Schließen des Hydraulikventils notwendigen hohen Kräfte aufbringen zu können und eine präzise und vor allem proportionale Steuerung zu realisieren, werden Proportionalventile mit einer Vorsteuerstufe und einer Hauptstufe eingesetzt, wobei ein in der Vorsteuerstufe befindlicher Führungskolben den in der Hauptstufe befindlichen Folgekolben steuert. Dabei ist der Führungskolben als Stufenkolben ausgebildet, so dass der Stößel bereits mit einem geringen Steuerdruck bewegt werden kann. Einzelheiten hierzu sind nachfolgend in Verbindung mit Fig. 1 näher ausgeführt:

In Fig. 1 der Zeichnung ist beispielhaft ein proportional gesteuertes 2-Wege Einbauventil dargestellt, welches nach dem Folgekolbenprinzip arbeitet. Dabei wird eine erste Fluidkammer 1 über einen am Gehäuse 2 angebrachten Proportionalmagneten in Verbindung mit einem Drosselventil 3 mit dem gewünschten Steuerdruck beaufschlagt wird, so dass sich der im Gehäuse 2 befindliche Führungskolben 4 axial bewegt. Mit dem Führungskolben 4 wird der Stößel 5 bewegt und hebt vom Folgekolben 6 ab, so dass die Ausgleichskammer 7 mit dem am hydraulischen Ventil 8 anliegenden Druck beaufschlagt wird. Gleichzeitig folgt der Folgekolben 6 dem Stößel 5 und öffnet das hydraulische Ventil 8 proportional zur Bewegung des Steuerkolbens 4.

Derartige hydraulische Ventile beanspruchen viel Platz, insbesondere weil der Proportionalmagnet und das Drosselventil 3 außen angeflanscht sind und weil entsprechende Verbindungsleitungen erforderlich sind, so dass eine wirtschaftliche Verwendung zum Beispiel in Landwirtschaftsmaschinen nicht möglich ist.

Davon ausgehend liegt der vorliegenden Erfindung die Aufgabe zu Grunde, eine Vorsteuerung der eingangs genannten Art zu schaffen, die bei gleicher Leistung sehr viel weniger Platz einnimmt und die kostengünstiger herzustellen ist.

Als technische Lösung dieser Aufgabe wird erfindungsgemäß eine Vorsteuerstufe mit den Merkmalen des Anspruches 1 vorgeschlagen. Vorteilhafte Weiterbildungen dieser Vorsteuerstufe sind den Unteransprüchen zu entnehmen.

Eine nach dieser technischen Lehre ausgebildete Vorsteuerstufe hat den Vorteil, dass sie gleichzeitig als Magnet arbeitet, wobei der Führungskolben als Anker fungiert und wobei die Spule um außen am Gehäuse angebracht ist. Hierdurch kann auf den extern angeflanschten Proportionalmagnet und das Drosselventil verzichtet werden, weshalb die erfindungsgemäße Vorsteuerstufe sehr viel kompakter ausgeführt werden kann, was zu einer erheblichen Platzersparnis führt. Auch reduzieren sich hierdurch die Herstellungskosten erheblich, nicht nur weil auf den externen Proportionalmagnet und das angeschlossene Drosselventil verzichtet wurde, sondern auch, weil keine Steuerleitungen mehr erforderlich sind.

Ein weiterer Vorteil liegt darin, dass durch den Einsatz der Hochdruckdichtungen die Kolbenkammer drucklos gehalten werden kann oder zumindest nur mit geringen Drücken beaufschlagt werden braucht. Hierdurch kann das Polrohr entsprechend dünnwandig ausgeführt werden, was zu einer weiteren Platz- und Kostenersparnis führt. Insbesondere wenn das Polrohr aus durch einen eingeschweißten Trennring in zwei Teile unterteilt ist, ist eine drucklose oder nur mit geringen Drücken beaufschlagte Kolbenkammer sehr vorteilhaft, weil dann die Schweißnaht nur mit geringen Kräften beansprucht wird.

Noch ein weiterer Vorteil liegt darin, dass in der Kolbenkammer auf beiden Seiten des Führungskolbens derselbe Druck vorherrscht. Hierdurch reduziert sich der Widerstand beim axialen Verschieben des Führungskolbens, so dass sich das Ansprechverhalten der Steuerstufe verbessert und so dass die Totzone und die Hysterese des Hydraulikventils reduziert werden. Diese Vorteile werden besonders signifikant, wenn die Kolbenkammer drucklos gehalten ist.

Noch ein Vorteil besteht darin, dass durch den Wegfall des Proportionalmagneten und des Drosselventils und der Verbindungsleitungen auch die ihm innewohnenden Fertigungstoleranzen entfallen, so dass bei der erfindungsgemäßen Vorrichtung weniger fertigungsbedingte Toleranzen zum Tragen kommen.

Weil sich aber bei derartigen hydraulischen Vorrichtungen die Fehlertoleranzen aufaddieren, führt das Fehlen des Proportionalmagneten zu einer präziseren Vorrichtung, die ein sehr viel präziseres Steuern des hydraulischen Ventils ermöglicht.
Noch ein weiterer Vorteil besteht darin, dass durch die geringere Anzahl der Bauteile auch das Gewicht reduziert wird.
In einer vorteilhaften Weiterbildung ist zum besseren Druckausgleich im Steuerkolben eine Verbindungsbohrung vorgesehen.

Außerdem ist, am Führungskolben eine Hülse anzubringen, die mit einem im Gehäuse angebrachten Wegaufnehmer zusammenwirkt. Ein solcher Wegaufnehmer (insbesondere ein LVDT) erfasst die aktuelle Position des Führungskolbens, so dass vorprogrammierte Sicherheitsfunktionen erkannt werden können.

Dabei hat es sich als vorteilhaft erwiesen, die Hülse außerhalb der Feder anzubringen, so dass der Wegaufnehmer die Hülse direkt erfassen kann, ohne von der Feder gestört zu werden.

In einer bevorzugten Ausführungsform ist die Kolbenkammer, bis auf etwas Leckageöl, frei von Hydraulikfluid. Dies verbessert das Ansprechverhalten weiter und reduziert auch die Totzone und die Hysterese weiter.

In einer anderen, vorteilhaften Weiterbildung ist an die Kolbenkammer eine Leckölbohrung angeschlossen, damit etwaig auftretendes Leckageöl abfließen kann und die Kolbenkammer zumindest überwiegend frei von Leckageöl bleibt.

In einer bevorzugten Ausführungsform ist in der Kolbenkammer eine Feder, vorteilhafterweise eine Druckfeder, vorgesehen, mit der ein Notverschluss des hydraulischen Ventils erreicht wird. Dies hat den Vorteil, dass hierdurch eine Notsicherung hergestellt wird, die im Falle eines Ausfalls des Hydrauliksystems den Steuerkolben in eine Ruheposition bringt, in der das hydraulische Ventil verschlossen ist. So kann bei einer Fehlfunktion des Hydrauliksystems sichergestellt werden, dass das hydraulische System schließt und somit keine Schäden verursacht werden.

In einer besonders bevorzugten Ausführungsform ist der hydraulische Querschnitt des Ausgleichskolbens identisch mit dem hydraulischen Querschnitt des Stößels. Dies hat den Vorteil, dass durch die identischen Querschnitte, die durch den am hydraulischen Ventil anliegenden Druck erzeugten und auf den Führungskolben wirkenden Kräfte vollständig ausgeglichen werden. Folglich braucht das elektro-magnetische Ventil nur geringe Kräfte, um den Führungskolben axial zu bewegen und kann entsprechend klein dimensioniert werden.
In einer bevorzugten Ausführungsform ist die Spule derart ausgelegt, dass das erzeugte Magnetfeld den Führungskolben zieht. Dies hat den Vorteil, dass hierdurch der Führungskolben sehr präzise bewegt werden kann, selbst wenn der gewünschte Hub lediglich einige zehntel Millimeter beträgt.

In einer anderen, bevorzugten Ausführungsform ist die Hochdruckdichtung als Spaltdichtung ausgeführt, deren Spalt nicht breiter als 8 µm, vorzugsweise nicht-breiter als 4 µm und am Besten nur 1µm breit ist. Eine solche Spaltdichtung hat den Vorteil, dass sie sehr verschleißarm ist, wenig Reibung verursacht und dennoch den Durchtritt von Hydraulikfluid auf ein Minimum reduziert. Aufgrund der geringen Reibung erreicht die Spaltdichtung ein günstiges Ansprech- und Hystereseverhalten.

Das Verfahren zum Betrieb einer erfindungsgemäßen Vorsteuerstufe zum proportionalen Steuern eines Hochdruck-Hydraulikventils läuft so ab, dass der Führungskolben innerhalb der Kolbenkammer des Gehäuses durch Erzeugung eines Magnetfeldes in axialer Richtung bewegt wird, wobei der Führungskolben gleichzeitig als Anker des Magneten fungiert. Gleichzeitig wird durch die mit dem Hydraulikventil verbundene Ausgleichskammer erreicht, dass die vom Hydraulikventil auf den Stößel wirkenden Kräfte kompensiert werden, so dass die Spule nicht vom Hydrauliksystem erzeugte Widerstände zu überwinden hat und der Stößel bereits mit entsprechend geringen Kräften bewegt werden kann.

Für den seltenen Fall, dass sich in der Kolbenkammer Lecköl befindet, sind entsprechende Leckölbohrungen vorgesehen aus denen das Lecköl austreten kann. Auch kann im Führungskolben eine Verbindungsbohrung bestehen, um einen Druckausgleich innerhalb der Kolbenkammer zu schaffen.

Weitere Vorteile der erfindungsgemäßen Vorsteuerstufe ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Schnittdarstellung eines proportional gesteuerten 2-Wege Ventils gemäß dem Stand der Technik;
- Fig. 2a: eine schematische Schnittdarstellung einer Vorsteuerstufe im Ruhezustand;
- Fig. 2b: die Vorsteuerstufe gemäß Fig. 2a im Arbeitszustand;
- Fig. 3: eine schematische Schnittdarstellung einer Ausführungsform einer erfindungsgemäßen Vorsteuerstufe im Ruhezustand;
- Fig. 4: eine schematische Schnittdarstellung einer Vorsteuerstufe im Ruhezustand;
- Fig. 5: die Vorsteuerstufe gemäß Fig. 2a als Vorsteuerung eines Hydraulikventils mit Folgekolben;
- Fig. 6: eine schematische Schnittdarstellung einer Vorsteuerstufe im Ruhezustand.

Fig. 1 zeigt ein proportional gesteuertes 2-Wege Hochdruck-Hydraulik-Einbauventil dessen Vorsteuerstufe ein Gehäuse 2 und ein darin axial verschieblich gehaltenen Führungskolben umfasst. Der Führungskolben setzt sich aus einem Steuerkolben 4 und einem daran angebrachten Stößel 5 zusammen. Dieser Stößel 5 reicht durch das Gehäuse 2 hindurch und wirkt mit dem 2-Wege-Hydraulikventil 8 zusammen. Seitlich angeflanscht ist ein Proportionalmagnet 3 mit einem integrierten Druckminderungsventil, welcher die erste Fluidkammer 1 mit dem für die jeweilige Anwendung gewünschten Steuerdruck beaufschlagt. Je nach gewünschter Situation wird über den Steuerdruck der Steuerkolben 4 axial nach oben oder nach unten bewegt. Dabei wirkt eine Feder 9 auf den Steuerkolben 4 und bringt diesen jeweils in die Ausgangsposition zurück. Im Inneren des Steuerkolbens 4 ist eine Ausgleichskammer 7 ausgebildet, die mit dem am Hydraulikventil 8 anliegenden Druck beaufschlagt wird. Hebt sich nun der Führungskolben und löst dabei den Stößel 5 vom Folgekolben 6 des Hydraulikventils 8 ab, so folgt der Folgenkolben 6 dieser Bewegung, bis er wieder am Stößel 5 anliegt. Folglich kann der Folgekolben 6 des Hydraulikventils 8 auf diese Art und Weise über den Steuerkolben 4 gesteuert werden.

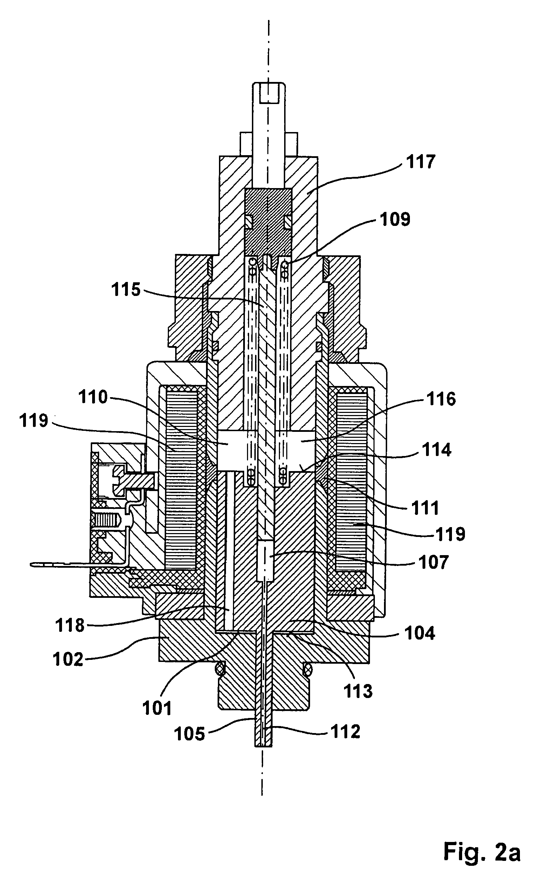

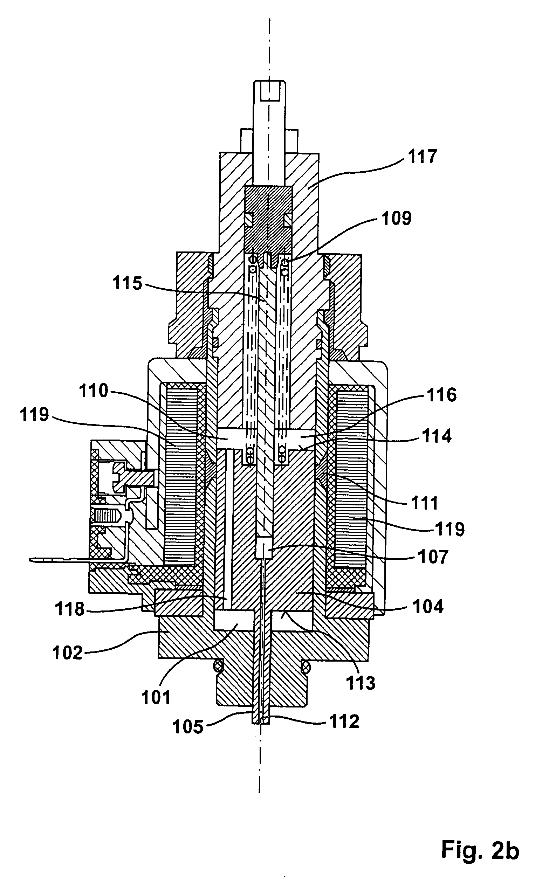

In den Figuren 2 a und 2 b ist eine Vorsteuerstufe zum proportionalen Steuern eines Hochdruck-Hydraulikventils dargestellt, wobei Fig. 2 a den Führungskolben in einer Ruheposition zeigt, während Fig. 2b den Führungskolben in einer Arbeitsposition zeigt. Diese Vorsteuerstufe umfasst ein Gehäuse 102 mit einer im Gehäuse 102 ausgebildeten Kolbenkammer 110, in der ein als Stufenkolben ausgeführter Führungskolben axial verschieblich gehalten ist. Dieser Führungskolben umfasst einen in der Kolbenkammer 110 geführten Steuerkolben 104 und einen daran angebrachten Stößel 105, wobei der Stößel 105 durch das Gehäuse 102 hindurchreicht und auf einen Folgekolben 106 des Hydraulikventils 108 wirkt.

Das Gehäuse 102 ist im Bereich des Steuerkolbens 104 als Polrohr ausgebildet. Dieses Polrohr weist einen ersten Bereich auf Höhe des Steuerkolbens 104 und einen zweiten Bereich oberhalb des Steuerkolbens 104 auf. Die beiden Bereiche werden durch eine umlaufende Trennschicht 111 getrennt, wobei das Material aus dem die Trennschicht 111 gebildet ist, sich von dem Material des Gehäuses 102 unterscheidet, sodass eine magnetische Trennung des Gehäuses 102 in einen ersten und einen zweiten Bereich erfolgt. In der hier dargestellten Vorsteuerstufe sind die beiden Bereiche miteinander verschweißt, so dass die Trennschicht 111 eine Schweißnaht darstellt.

Der Führungskolben ist mit seinem Steuerkolben 104 ist passgenau in der Kolbenkammer 110 geführt, wobei zwischen dem Steuerkolben 104 und dem Gehäuse 102 eine hier nicht dargestellte Spaltdichtung vorgesehen ist, bei der der Abstand zwischen dem Steuerkolben 104 und der Innenwand des Gehäuses 102 maximal 8 µm, vorzugsweise nur 4µm und am Besten nur 1 µm beträgt.

In einer anderen, hier nicht dargestellten Vorsteuerstufe, kann die Spaltdichtung zwischen dem Steuerkolben 104 und dem Gehäuse 102 auch dicker ausgebildet sein.

Zwischen dem Stößel 105 und dem Gehäuse 102 ist ebenfalls eine Spaltdichtung (nicht dargestellt) ausgebildet, wobei auch hier der Abstand zwischen der Außenwand des Stößels 105 und der Innenwand des Gehäuses 102 höchstens 8 µm, vorzugsweise 4 µm, am Besten nur 1 µm beträgt. Über diese Spaltdichtung wird die Kolbenkammer 110 gegenüber dem Hydraulikfluid des hydraulischen Systems abgedichtet.

Im Steuerkolben 104 ist um dessen Längsachse herum koaxial eine Ausgleichskammer 107 ausgebildet, an die sich eine Stößelbohrung 112 anschließt. Diese Stößelbohrung 112 reicht von der Ausgleichskammer 107 durch einen Teil des Steuerkolbens 104 und durch den gesamten Stößel 105 hindurch und erlaubt einen Druckausgleich zwischen der Ausgleichskammer 107 und dem am hier nicht dargestellten Hydraulikventil anliegenden Druck.

Der Stößel 105 ist an einer ersten Stirnseite 113 des Steuerkolbens 104 angebracht, während die Ausgleichskammer 107 in eine zweite Stirnseite 114 des Steuerkolbens 104 mündet. Diese Ausgleichskammer 107 wird durch einen Ausgleichskolben 115 abgedichtet, der in die Ausgleichskammer 107 hineinreicht. Zwischen dem Ausgleichskolben 115 und dem Steuerkolben 104 ist ebenfalls eine hier nicht näher dargestellte Spaltdichtung (nicht dargestellt) vorgesehen, deren Dicke maximal 8 µm, vorzugsweise 4 µm, am Besten nur 1 µm beträgt.

Angrenzend an die erste Stirnseite 113 des Steuerkolbens 104 ist in der Kolbenkammer 110 eine erste Fluidkammer 101 ausgebildet, während angrenzend an die zweite Stirnseite 114 des Steuerkolbens 104 eine zweite Fluidkammer 116 vorgesehen ist. Die Kolbenkammer 110 und entsprechend auch die zweite Fluidkammer 116 wird nach oben hin begrenzt durch einen Anschlag 117, der fest mit dem Gehäuse 102 verbunden ist. Neben dem Ausgleichskolben 115 ist am Anschlag 117 auch eine auf Druck belastete Feder 109 gehalten, welche als Wendelfeder ausgebildet ist. Diese Feder 109 reicht bis an die zweite Stirnseite 114 des Steuerkolbens 104 heran und wirkt permanent auf den Steuerkolben 104 ein. Dabei ist die Feder 109 so ausgelegt, das der Steuerkolben 104 ganz in das Gehäuse 102 hineingedrückt wird, sofern die Vorrichtung ihre Ruheposition einnehmen soll. Dies ist in Fig. 2 a dargestellt. In dieser Ruheposition verschließt der Stößel 105 das hier nicht näher dargestellte Hydraulikventil 108 und gleichzeitig wird die erste Fluidkammer 101 auf ein Minimum verkleinert.

In Fig. 2b ist der Führungskolben in einer Arbeitsposition dargestellt, wobei die erste Fluidkammer 101 entsprechend der Position des Steuerkolbens 104 eine gewisse Größe einnimmt und wobei die zweite Fluidkammer 116 entsprechend kleiner ist. Eine im Steuerkolben 104 vorgesehen Verbindungsbohrung 118 ermöglicht einen Druckausgleich zwischen der ersten Fluidkammer 101 und der zweiten Fluidkammer 116, sodass der Steuerkolben 104 während seiner axialen Bewegung keine Kräfte zur Überwindung eines eventuellen Druckunterschiedes aufnehmen muss.

Außerhalb des Gehäuses 102 ist eine Spule 119 vorgesehen, die sich über den gesamten Umfang des Gehäuses 102 erstreckt. Diese Spule 119 bildet zusammen mit dem Steuerkolben 104 einen Elektromagneten, wobei der Steuerkolben 104 als axial verschieblicher Anker des Elektromagneten fungiert.

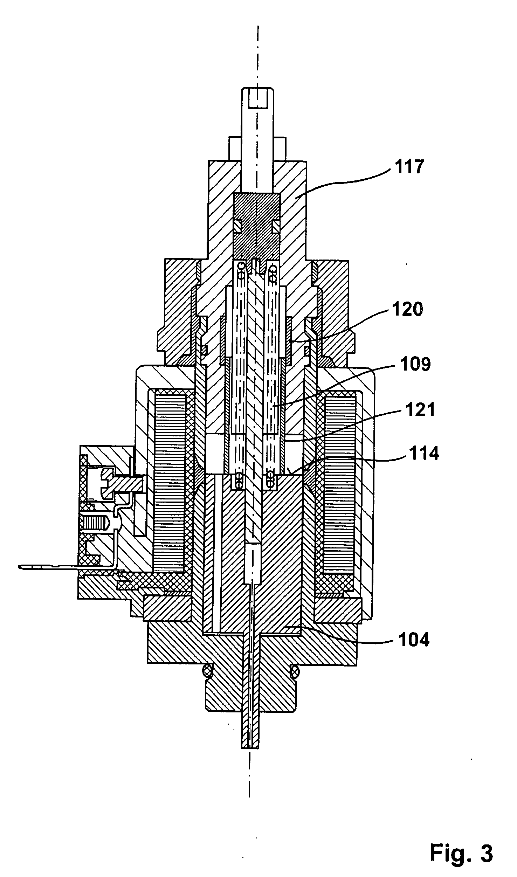

Fig. 3 zeigt eine Ausführungsform der erfindungsgemäßen Vorsteuerstufe, wobei diese Ausführungsform der in Figuren 2 a und 2 b dargestellten Vorsteuerstufe entspricht und zusätzlich noch einen im Anschlag 117 eingelassenen Wegaufnehmer 120, einen sogenannten LVDT, aufweist. An der zweiten Stirnseite 114 des Steuerkolbens 104 ist eine Hülse 121 koaxial angebracht, die bis zum Wegaufnehmer 120 reicht. Dabei befindet sich das Ende der Hülse 121 stets im Bereich des Wegaufnehmers 120, sodass alle möglichen Positionen des Steuerkolbens 104 und somit des Stößels 105 vom Wegaufnehmer 120 erfasst werden.

Die Hülse 121 ist um die Feder 109 herum angeordnet, sodass die Hülse 121 einen direkten Sichtkontakt zum Wegaufnehmer 120 hat.

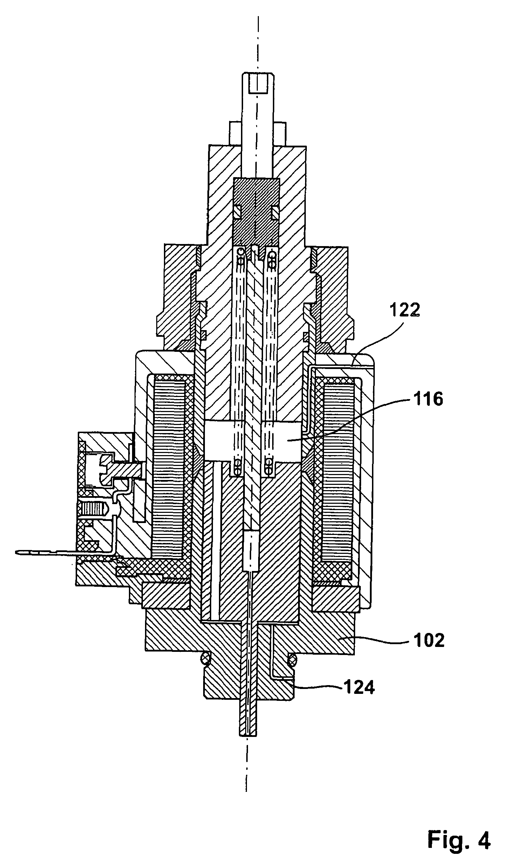

Die in Fig. 4 dargestellte Vorsteuerstufe unterscheidet sich von der in Figuren 2a-b dargestellten Vorsteuerstufe lediglich dadurch, dass hier zusätzlich im Gehäuse 102 ein Entleerungskanal 122 und ein vorgesehen ist, der in die zweite Fluidkammer 116 mündet. Mit diesem Entleerungskanal 122 kann der Druck innerhalb der ersten 102 und der zweiten Fluidkammer 116 eingestellt werden.

Außerdem ist im Gehäuse 102 eine Leckölbohrung 124 vorgesehen, die einerseits in die erste Fluidkammer 101 mündet und andererseits in ein hier nicht näher dargestelltes Anschlussgewinde mündet. Diese Leckölbohrung 124 soll unerwünscht in die Kolbenkammer 110 eintretendes Lecköl wieder heraustransportieren.

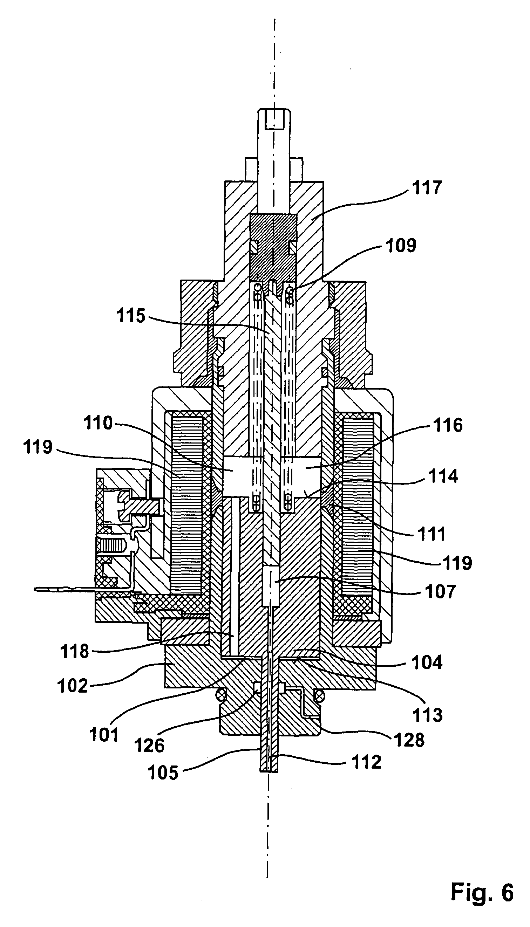

Die in Fig. 6 dargestellte Vorsteuerstufe unterscheidet sich von der in Fig. 2 a-b dargestellten Vorsteuerstufe lediglich dadurch, dass hier zusätzlich im Gehäuse 102 im Bereich des Stößels 105 eine Ringkammer 126 ausgebildet ist, an die eine Leckölbohrung 128 angeschlossen ist. Die Ringkammer 126 befindet sich oberhalb der hier nicht näher dargestellten Spaltdichtung und verhindert, dass etwaiges, durch die Spaltdichtung hindurchgetretenes Lecköl in die Kolbenkammer 110 gelangt, wobei dieses Lecköl in der Ringkammer 126 aufgefangen und durch die Leckölleitung 128 abtransportiert wird.

In einer anderen, hier nicht dargestellten Ausführungsform ist die Hochdruckdichtung als dynamische Dichtung ausgeführt, die sich unter Druck ausdehnt. Dabei kommt ein umlaufender Gleitring zum Einsatz.

Nachfolgend wird die Funktionsweise der erfindungsgemäßen Vorsteuerstufe wie folgt beschrieben:
In der Ruheposition wird der Steuerkolben 104 durch die Feder 109 soweit nach unten gedrückt, dass die erste Fluidkammer 101 auf ein Minimum reduziert wird. Gleichzeitig reicht der Stößel 105 bis zum Hydraulikventil 108 und kommt am Folgekolben 106 zur Anlage. Hierdurch ist eine Notfallsicherung geschaffen, die das Hydraulikventil 108 verschließt, sofern zum Beispiel ein Stromausfall oder ein anderer Defekt vorliegt.

Durch die Stößelbohrung 112 ist die Ausgleichskammer 107 hydraulisch mit dem am Hydraulikventil 108 anliegenden Druck verbunden. Der hierdurch geschaffene Druckausgleich bewirkt, dass der Steuerkolben 104 in axialer Richtung verschoben werden kann, ohne erst die durch den Hydraulikdruck erzeugten Kräfte überwinden zu müssen, weil die durch den Hydraulikdruck am Stößel 105 angreifenden Kräfte und die in der Ausgleichskammer 107 ausgebildeten Druckkräfte gegeneinander aufheben.

Wird nun die Spule 119 mit Elektrizität beaufschlagt, so wird ein elektromagnetisches Feld aufgebaut. Weil der Steuerkolben 104 quasi als Anker dieses Elektromagneten fungiert, wird der Steuerkolben 104 axial, in diesem Falle nach oben, bewegt. Es hat sich gezeigt, dass hierdurch der Steuerkolben 104 sehr präzise bewegt werden kann, sodass eine axiale Verschiebung um wenige Zehntel Millimeter einstellbar ist.

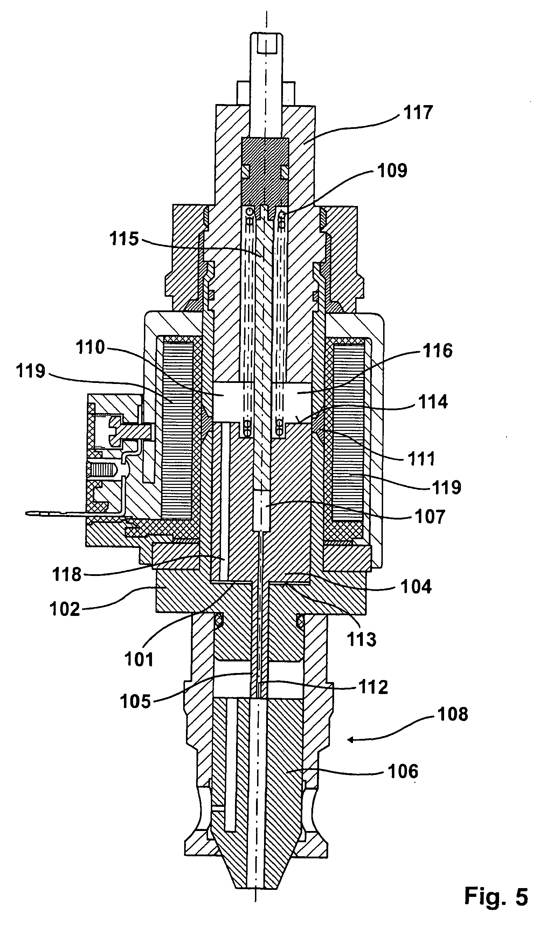

Wie insbesondere in Fig. 5 zu sehen ist, kann mit der Vorsteuerstufe ein als Folgekolbenventil ausgebildetes proportional angesteuertes Hydraulikventil 108 gesteuert werden, welches hier als 2-Wegeventil ausgelegt ist, in anderen Ausführungsformen aber auch als 3-Wege- oder 4-Wegeventil ausgelegt sein kann.

In den hier dargestellten Vorsteuerstufe ist der hydraulische Querschnitt des Ausgleichskolbens 115 und somit der Ausgleichskammer 107 identisch mit dem hydraulischen Querschnitt des Stößels 105. Hierdurch werden die am Hydraulikventil 108 anliegenden Drücke kompensiert und entfalten keine Kraft auf den Steuerkolben 104.

In einer anderen, hier nicht dargestellten Ausführungsform kann der hydraulische Querschnitt der Ausgleichskammer 107 größer sein, als der hydraulische Querschnitt des Stößels 105. In diesem Falle wirkt eine Kraft auf den Steuerkolben 104 und bewirkt ein zuverlässiges Schließen des Hydraulikventils 108 im Notfalle, zum Beispiel im Falle eines Defekt oder eines Stromausfalls. Hierdurch wird eine zusätzliche Notfallsicherung erreicht.

Auf Grund der sehr kompakten Bauweise der erfindungsgemäßen Vorsteuerstufe zum proportionalen Steuern eines Hochdruck-Hydraulikventils eröffnen sich vielfältige Anwendungsmöglichkeiten. Ein Beispiel ist hierfür die Anwendung in landwirtschaftlichen Fahrzeugen oder Maschinen zum Steuern von Pflanzen oder Bodenbearbeitungswerkzeugen, oder der Einsatz bei Produktionsautomaten.

Gleichzeitig reduzieren sich die Fertigungskosten, unter anderem, weil aus dem Stand der Technik bekannten Proportionalmagneten verzichtet werden kann. Noch ein weiterer Vorteil besteht darin, dass auf Grund der geringen Anzahl von Bauteilen auch die Fertigungstoleranzen zumindest in der Summe weniger werden, sodass ein präziseres Steuern des hydraulischen Druckes möglich ist. Nicht zuletzt wird die Vorrichtung hierdurch sehr viel leichter und auch kostengünstiger in der Herstellung.

## Patentansprüche

1. Vorsteuerstufe für ein proportional gesteuertes Hochdruck-Hydraulikventil, mit einem Gehäuse (102), in dem eine Kolbenkammer (110) ausgebildet ist, mit einem im Gehäuse (102) axial verschieblich gehaltenen Führungskolben, wobei der Führungskolben einen in der Kolbenkammer (110) axial verschieblich gehaltenen Steuerkolben (104) und einen durch das Gehäuse (102) hindurchreichenden Stößel (105) umfasst, so dass der Stößel (105) mit einem Folgekolben (106) des Hydraulikventils (108) wirkverbunden werden kann und mit einem Ausgleichskolben (115), der in eine im Steuerkolben (104) ausgebildete Ausgleichskammer (107) hineinreicht, wobei im Führungskolben eine axial ausgerichtete Stößelbohrung (112) ausgebildet ist, die von der Ausgleichskammer (107) bis zum freien Ende des Stößels (105) reicht, so dass die Ausgleichskammer (107) hydraulisch mit dem Hydraulikventil (108) verbunden ist,
wobei das Gehäuse (102) zumindest im Bereich des Steuerkolbens (104) als Polrohr ausgebildet ist, dass um das Polrohr herum eine elektromagnetische Spule (119) angeordnet ist, dass der Steuerkolben (104) als elektromagnetischer Anker ausgebildet ist, so dass die Spule (119) derart mit dem Steuerkolben (104) zusammenwirkt, dass bei Beaufschlagung der Spule (119) mit Elektrizität der Steuerkolben (104) und damit auch der Stößel (105) axial bewegt wird dass die Kolbenkammer (110) über eine Hochdruckdichtung zwischen dem Ausgleichskolben (115) und dem Steuerkolben (104) und über eine Hochdruckdichtung zwischen dem Stößel (105) und dem Gehäuse (102) derart gegenüber dem Hochdruckbereich des Hydraulikventils (108) abgedichtet ist, dass die Kolbenkammer (110) im Niederdruckbereich oder drucklos gehalten ist, **dadurch gekennzeichnet, dass** am Gehäuse (102) ein Wegaufnehmer (120) vorgesehen ist, der mit einer am Steuerkolben (104) angebrachten Hülse (121) zusammenwirkt.

2. Vorsteuerstufe nach Anspruch 1,
**dadurch gekennzeichnet,**
**dass** in der Kolbenkammer (110) eine Feder (109) angeordnet ist, die auf den Führungskolben wirkt und diesen in eine Ruheposition drängt.

3. Vorsteuerstufe nach wenigstens einem der vorangehenden Ansprüche,
**dadurch gekennzeichnet,**
**dass** der hydraulische Querschnitt des Ausgleichskolbens (115) identisch mit dem hydraulischen Querschnitt des Stößels (105) ist.

4. Vorsteuerstufe nach wenigstens einem der vorangehenden Ansprüche,
**dadurch gekennzeichnet,**
**dass** die Spule (119) derart ausgelegt ist, dass das erzeugte Magnetfeld den Steuerkolben (105) zieht.

5. Vorsteuerstufe nach wenigstens einem der vorangehenden Ansprüche,
**dadurch gekennzeichnet,**
**dass** die Hochdruckdichtung als Spaltdichtung ausgebildet ist.

6. Vorsteuerstufe nach Anspruch 5,
**dadurch gekennzeichnet,**
**dass** der Spalt der Spaltdichtung maximal 8 µm dick ist.

7. Vorsteuerstufe nach wenigstens einem der vorangehenden Ansprüche, **dadurch gekennzeichnet,**
**dass** an die Kolbenkammer (110) eine Leckölbohrung (124) angeschlossen ist.

8. Vorsteuerstufe nach wenigstens einem der vorangehenden Ansprüche, **dadurch gekennzeichnet,**
**dass** im Steuerkolben (104) eine Verbindungsbohrung (118) vorgesehen ist, um beim axialen verschieben des Steuerkolbens (104) in der Kolbenkammer (110) einen Druckausgleich zu gewährleisten.

9. Vorsteuerstufe nach einem der voranstehenden Ansprüche,
**dadurch gekennzeichnet,**
**dass** die Hülse (121) koaxial angebracht ist.

10. Vorsteuerstufe nach Anspruch 9,
**dadurch gekennzeichnet,**
**dass** die Hülse (121) radial betrachtet zwischen der Feder (109) und dem Wegaufnehmer (120) angeordnet ist.

## Claims

1. Pilot-control stage for a proportionally controlled high-pressure hydraulic valve with a housing (102), in which a piston chamber (110) is formed, with a guide piston which is held such that it can be displaced axially in the housing (102), wherein the guide piston comprises a control piston (104), which is held such that it can be displaced axially in the piston chamber (111), and a tappet (105) reaching through the housing (102), so that the tappet (105) can be operatively connected to a following piston (106) of the hydraulic valve (108) and to a compensating piston (115) which reaches into a compensating chamber (107) formed in the control piston (104), wherein an axially oriented tappet bore (112), which reaches from the compensating chamber (107) as far as the free end of the tappet (105), is formed in the guide piston, so that the compensating chamber (107) is connected hydraulically to the hydraulic valve (108), wherein the housing (102) is formed as a pole tube at least in the region of the control piston (104), an electromagnetic coil (119) is arranged around the pole tube, the control piston (104) is configured as an electromagnetic armature, so that the coil (119) interacts with the control piston (104) in such a way that, when the coil (119) is loaded with electricity, the control piston (104) and therefore also the tappet (105) are moved axially, wherein the piston chamber (110) is sealed with respect to the high-pressure region of the hydraulic valve (108) via a high-pressure seal between the compensating piston (115) and the control piston (104) and via a high-pressure seal between the tappet (105) and the housing (102), in such a way that the piston chamber (110) is kept in the low-pressure range or pressure less, **characterised in that** a displacement transducer (120) is provided on the housing (102), which interacts with a sleeve (121) fixed on the control piston.

2. Pilot stage according to claim 1,
**characterised in that**,
a spring (109) is located in the piston chamber (110), which acts on the guide piston and pushes it into a resting position.

3. Pilot stage according to at least one of the afore-mentioned claims,
**characterised in that**,
the hydraulic cross section of the compensating piston is identical to the hydraulic cross-section of the tappet (105).

4. Pilot stage according to at least one of the afore-mentioned claims,
**characterised in that**,
the coil (119) is designed so that the generated magnetic field pulls the piston (105).

5. Pilot stage according to at least one of the afore-mentioned claims,
**characterised in that**,
the high-pressure seal is designed as a gap seal.

6. Pilot stage according to claim 5,
**characterised in that**,
the gap of the gap seal has a maximum thickness of 8 µm.

7. Pilot stage according to at least one of the afore-mentioned claims,
**characterised in that**,
an leakage oil bore (124) is connected to the piston chamber (110).

8. Pilot stage according to at least one of the afore-mentioned claims,
**characterised in that**,
a connecting bore (118) is provided in the control piston (104), so as to ensure a pressure compensation when the control piston is axially displaced in the piston chamber (110).

9. Pilot stage according to one of the afore-mentioned claims,
**characterised in that**,
the sleeve (121) is coaxially mounted.

10. Pilot stage according to Claim 9,
**characterised in that**,
the sleeve (121) is disposed radially between the spring (109) and the displacement transducer (120).

## Revendications

1. Etage de pilotage d'une soupape hydraulique haute pression à commande proportionnelle comprenant un carter (102), dans lequel est formée une chambre à piston (110), un piston de guidage maintenu axialement mobile dans le carter (102), où le piston de guidage comporte un piston de commande (104) maintenu axialement mobile dans la chambre à piston (111) et un poussoir (105) traversant le carter (102), de sorte que le poussoir (105) peut être en liaison active avec un piston suiveur (106) de la soupape hydraulique (108), et un piston d'équilibrage (115) qui pénètre dans une chambre d'équilibrage (107) formée dans le piston de commande (104), où un orifice de poussoir (112) orienté axialement est formé dans le piston de guidage et s'étend de la chambre d'équilibrage (107) jusqu'à l'extrémité libre du poussoir (105), de sorte que la chambre d'équilibrage (107) est hydrauliquement reliée à la soupape hydraulique (108),
où le carter (102) est formé au moins dans la zone du piston de commande (104) sous la forme d'un tube polaire; une bobine électromagnétique (119) est disposée autour du tube polaire; le piston de commande (104) est conçu comme induit électromagnétique de sorte que la bobine (119) coopère avec le piston de commande (104) de telle manière que, lorsque la bobine (119) est alimentée en électricité, le piston de commande (104) et donc aussi le poussoir (105) sont déplacés axialement; et la chambre à piston (110) est étanchéifiée par l'intermédiaire d'un joint haute pression situé entre le piston d'équilibrage (115) et le piston de commande (104) et par l'intermédiaire d'un joint haute pression situé entre le piston (105) et le carter (102) vis-à-vis de la zone haute pression de la soupape hydraulique (108) de telle manière que la chambre à piston (110) est maintenue dans la plage basse pression ou sans pression, **caractérisé en ce qu'**un capteur de déplacement (120) est prévu au niveau du carter (102), ce dernier interagissant avec une gaine installée au niveau du piston de commande.

2. Etage de pilotage selon la revendication 1,
**caractérisé en ce qu'**
un ressort (109) qui actionne le piston de guidage et qui le pousse dans une position de repos est disposé dans la chambre à piston (110).

3. Etage de pilotage selon au moins l'une des revendications précédentes,
**caractérisé en ce que**
la section transversale hydraulique du piston d'équilibrage (115) est identique à la section transversale hydraulique du piston (105).

4. Etage de pilotage selon au moins l'une des revendications précédentes,
**caractérisé en ce que**
la bobine électromagnétique (119) est conçue de manière à ce que le champ magnétique généré tire le piston (105).

5. Etage de pilotage selon au moins l'une des revendications précédentes,
**caractérisé en ce que**
le joint haute pression est conçu comme un joint d'interstice.

6. Etage de pilotage selon la revendication 5,
**caractérisé en ce que**
la fente du joint d'interstice est longue de 8 µm au maximum.

7. Etage de pilotage selon au moins l'une des revendications précédentes,
**caractérisé en ce qu'**
un alésage d'huile de fuite (124) est connecté à la chambre à piston (110).

8. Etage de pilotage selon au moins l'une des revendications précédentes,
**caractérisé en ce qu'**
un alésage de communication (118) est prévu dans le piston de commande (104), afin d'assurer un équilibrage de la pression lors du déplacement axial du piston de commande (104) dans la chambre à piston (110).

9. Etage de pilotage selon au moins l'une des revendications précédentes,
**caractérisé en ce que**
la gaine (121) est montée de manière coaxiale.

10. Etage de pilotage selon la revendication 9,
**caractérisé en ce que**
dans une vue la gaine (121) est disposée radialement entre le ressort (109) et le capteur de déplacement (120).
